# EUROPEAN PATENT APPLICATION

(11) **EP 4 793 489 A1**
(43) Date of publication of application: **19.08.2026**
(21) Application number: 26158911.3
(22) Date of filing: 16.02.2026
(51) Int. Cl.: F03D 1/06, F03D 3/06

(54) **A SPIRAL-SHAPED ROTOR FOR A WIND OR WATER TURBINE CONSTRUCTED OF ROUND OR OVAL PLATES WOUND INTO A SPIRAL SHAPE.**

(30) Priority: 16.02.2025 PL 45123425
(71) Applicant: Onrevolt Spolka Z Ograniczona Odpowiedzialnoscia, 60-452 Poznan (PL)
(72) Inventor: BUSZY SKI, Jakub, 60-452 POZNA (PL); MIETANA, Mariusz, 61-885 POZNA (PL); BONIKOWSKI, Micha, 02-797 Warszawa (PL)
(74) Representative: Korbela, Anna

(57) **Abstract**

Embodiments of the present disclosure may include a wing assembly comprising a flat wing made of thermoplastic or composite material (a). Embodiments may also include a series of mounting pins arranged in a predefined pattern (b). Embodiments may also include adaptive universal locking clamps designed to secure the wing sheet to the mounting pins and the common main axis, while simultaneously allowing adjustment of the three-dimensional curvature (c).

## Description

The present invention relates to an adjustable element forming a spiral structure for converting the energy from a flow of a working medium into useful energy, which, after assembly using a dedicated system for assembling spiral structures for converting the energy from a flow of a working medium into useful energy, **is adapted to convert the** kinetic **energy** of a **fluid medium into useful energy, in particular mechanical energy, electrical energy, or another form of output energy.**

The versatility of the developed solution also results from the possibility of selecting an appropriate material from which the adjustable element forming the spiral structure is made.

As a result, the invention is applicable in gas, liquid, and multiphase flows, including streams containing solid particles, droplets, or bubbles.

The element forming the spiral structure is capable of efficiently capturing kinetic energy from wind, rising warm air, as well as from water and water vapor, since the **flow of these media enables the generation of flow-induced forces acting on the structure, such as lift and drag forces, leading to the generation of torque or another form of useful energy.**

Accordingly, the element may be used in any of these environments, **in both gas and liquid flows, since its lifting profile, understood as an appropriately shaped cross-section of the element, is adapted to generate a controlled distribution of pressure and velocity in the surrounding fluid medium. As a result of this interaction, flow-induced forces are generated, in particular lift and drag components, analogously to wing profiles or blades operating in a fluid stream.**

The element may be used in any system for capturing and directing a fluid stream or an air stream, since in each of these environments it enables the generation of lift and/or a force components resulting from the kinetic momentum of the flowing medium.

The invention also relates to a **method of assembling an element forming a spatial spiral structure having flow properties, in particular for wind turbines, constituting a stage following the manufacture of the element in a substantially flat form and its simplified transport, and comprising a subsequent stage of forming a final three-dimensional geometry at the installation site and preparing the element for operation in a working system.**

In the disclosed solutions:
- **the structure is dynamically adjustable at the assembly stage,**
- the structure has a variable geometry **adapted during the planning of efficient energy conversion,**
- during assembly, **dynamic and configurable planning is performed, taking into account the structure of the flow.**

Conventional aerodynamic structures, such as turbine blades or propeller wings, require complex, high-precision forming and manufacturing processes. These processes increase costs due to the required lift capacity of the elements and their weight (which is typically significant). Weight is critical as it affects structural strength, particularly when advanced composite materials are used, such as thermoplastics, fiberglass, carbon fiber, or Kevlar. Additionally, the logistics of transporting large, pre-formed aerodynamic structures further contribute to high costs and inefficiencies.

Known conventional aerodynamic structures are rigid, require careful transport, and limit modifications after manufacture.

The requirement to achieve appropriate strength parameters in known solutions results in structures with substantial mass, increasing the moment of inertia of the system, which limits dynamic response, increases mechanical loads, and reduces efficiency under variable flow conditions. In contrast, reducing the mass of aerodynamic elements decreases inertia and improves the overall energy efficiency of the system.

From the **Korean** patent application filed on 06.11.2012, KR 20120124715 A (published as WIPO/PCT No. WO 2014/073741**)** entitled *"Blade having a divided shaft and blade unit utilizing the blade and method for making the blade unit",* there is known an invention describing a propeller having a divided shaft intended to form a multi-blade assembly cooperating with the shaft and arranged around it to obtain torque from a working fluid flow. The solution includes a blade and a divided shaft integrally connected along the root portion of the blade, the shaft being divided into multiple parts along its length. However, this solution is formed during manufacturing and exhibits all disadvantages associated with transporting large and heavy objects from the production site to the installation site.

The objective of the inventions, namely *"An adjustable element for forming a spiral structure for converting energy from a flow of a working medium into useful energy"* and *"A system for assembling spiral structures for converting energy from a flow of a working medium into useful energy"* was to develop both a lightweight element, initially in a flat form and capable of being transported as a flat sheet, and a technological assembly procedure enabling simplified transport and on-site assembly at the location of intended operation of the spiral structures.

Another objective of the disclosed solutions is to provide a solution in which the **capability of converting the energy from the flow of a working medium into useful energy** (for example, converting the kinetic energy of wind into torque) can **be achieved using** different **geometries** and **materials** selected as **optimal** for a given environment.

The **essence** of the developed invention lies in that the adjustable element for forming a spiral structure for converting energy from a flow of a working medium into useful energy, **consists** optimally of three analogous **sheets,** typically semicircular in shape. Each sheet, initially flat and subsequently wound, has three edges:
- **edge "a"** - which, after winding the sheet, forms an inner edge of the spiral structure, adjacent to a cylinder constituting an **axis of rotation,** around which a final form adapted for optimal converting energy form the flow of the working medium into useful energy is formed, said edge extending from a junction with edge "b" towards a junction with edge "c", and for example reaching edge "c" at an angle in the range of approximately 60° to 120°, wherein edge "a" constitutes the only region of contact between the **sheet** and the **axis of rotation,** preferably in the form of a cylinder,
- **edge "b"** - which, after winding the **sheet,** forms an edge corresponding to the widest portion of a geometric figure formed by spirally wrapping the sheet around the cylinder constituting the **axis of rotation,** wherein, in a structure composed of three analogous sheets forming a spiral around the cylinder constituting the **axis of rotation,** edge "b" traces an outer radius of the structure;
- **edge "c"** - which, after winding the **sheet,** forms an outer circumferential edge of the spiral structure of the **sheet** used to form the final configuration adapted for optimal converting energy from the flow of the working medium into useful energy.

The points of intersection of edges "b" and "c" define the outer radius of the structure formed by the analogous **sheets** arranged in a spiral around the cylinder constituting the axis of **rotation.**

Additionally:
the points of intersection of edges "b" and "c" are the farthest from the central element **of the structure,** and edge "b" constitutes the radius of the structure,
simultaneously, the intersections of edges "b" and "c" form the **outermost boundary points of the spiral structure** around the cylinder, i.e. around the **axis of rotation,** i.e. around the spiral structure for converting the energy of the working medium flow into useful energy.

Preferably, in the adjustable element forming a spiral structure for converting energy from the flow of the working medium into useful energy, the sheet a basic fragment of an oval plane, typically with a centrally arranged, substantially **semicircular cut-out.**

In many cases, in the developed adjustable element forming a spiral structure for converting energy from the flow of the working medium into useful energy, the spiral structure constitutes a turbine.

Typically, in the adjustable element forming a spiral structure (for converting energy from the flow of the working medium into useful energy), the junction:
- between **edge "a"** and **edge "c"** of the plane of the **sheet** is rounded; and optionally
- between **edge "b"** and **edge "c"** of the plane of the **sheet** is sharp.

In some embodiments of the adjustable element forming a spiral structure for converting energy from the flow of the working medium into useful energy, the sheets are:
- **initially flat** and made of **at least one thermoplastic** or **composite material,** such as fiberglass, carbon fiber, Kevlar or another advanced composite material, and constitute the primary structural elements. The **sheets are flat at the initial stage of the assembly system** and are subsequently **shaped** into a spiral. Additionally:
- a plurality of **mounting elements** with adjustable **clamps** are arranged at predetermined locations on the cylinder, i.e. on the **axis of rotation,** and together they constitute an element forming a spiral structure with **mounting elements** with adjustable **clamps for gradual adjustment** in order to **obtain a desired three-dimensional** aerodynamic curvature, with at least **two degrees of freedom** of positional **adjustment.**

Typically, the adjustable element forming a spiral structure for converting energy from the flow of the working medium into useful energy is characterized by essential **turbine** components, namely **spokes** and **fasteners,** which constitute a **supporting framework,** as they **are integrated** with the sheets.

**In most embodiments,** in the the adjustable element forming a spiral structure for converting energy from the flow of the working medium into useful energy, the spokes extend through the planes of the sheets. Alternatively, the spokes are arranged adjacent to the sheets and are mounted to a shaft, i.e. to the axis of rotation.

Preferably, in the adjustable element forming a spiral structure for converting energy from the flow of the working medium into useful energy, the sheet is mounted by means of hinged **fasteners or usually articulated clamps, connectors, or collars,** enabling adaptation to the local inclination and curvature of the spirally mounted **sheet,** wherein these elements are arranged in at least **three mounting zones:**
- in a zone adjacent to a tubular element;
- in a central zone and an intermediate zone; and
- in an edge zone of the blade.

Most preferably, the adjustable element forming a spiral structure for converting energy from the flow of the working medium into useful energy is equipped with a **thermoforming mechanism** configured to assist in the process of spirally shaping the **sheet, or with built-in heating elements,** or with an **external thermal application.**

Typically, the adjustable element forming a spiral structure for converting energy from the flow of the working medium into useful energy has a three-dimensional **shape corresponding** to an **Archimedean spiral** or a similar aerodynamic profile optimized for efficiency.

On the other hand, the **essence of the system for assembling spiral structures for converting energy from the flow of the working medium into useful energy** consists in that it comprises the step of:
a. supplying a flat **sheet** material or
b. **positioning** mounting **elements** with clamps in a predefined arrangement or
c. attaching the sheets to the mounting elements with **clamps** or
d. adjusting locking **clamps** in order to form a three-dimensional aerodynamic profile or
e. mounting from one to six spirally wound **sheets** on a common **axis of rotation** using a universal locking **clamp** or
f. optionally applying thermoforming or pre-stressing to increase shaping precision or
g. locking mounting elements with clamps - designed for securing the sheet to a common axis of rotation - may be used to adjust the three-dimensional curvature or
h. advantageously, the **sheets of the turbine** may be **shaped** using **built-in heating elements** of the developed, adjustable element forming a spiral structure (for converting energy form the flow of the working medium into useful energy) or an **external thermal application** used **to soften thermoplastic sheets** in order to facilitate precise shaping thereof, when thermoplastic materials are used to make sheet or
i. mounting elements with **clamps** may be strategically arranged to enable **assembly and obtaining multiple configurations and curvatures** adapted to aerodynamic performance requirements or
j. adaptive, universal mounting elements with **clamps** are provided with a **rotary joint** and a **bending joint,** enabling the **clamps** to adapt to changes **in inclination and shape of the sheets** or
k. the **turbine** may be shaped in such that it **comprises a supporting framework** consisting of **spokes** and **fasteners,** which ensures structural stability even when its spirally shaped sheets are subjected to intense aerodynamic forces or
l. in some embodiments, the three-dimensional aerodynamic profile profile to correspond to an Archimedean spiral or a similar shape designed for aerodynamic optimization or
m. in some embodiments of the developed spiral structure the **system for assembling spiral structures for converting energy from the flow of the working medium into useful energy,** the sheet material may be selected from: thermoplastic, glass fiber, carbon fiber, Kevlar or other advanced composite materials, ensuring durability and performance.

The **advantages** of the developed adjustable element forming a spiral structure for converting the energy of a working fluid flow into useful energy, and of the method for its assembly, lie in that they enable a **reduction in material consumption** during the production of such structures, as required in known solutions.

The developed solutions make it possible not only **to solve the problem of excessive** consumption of semi-finished materials, but also to reduce the need for large-scale production molds.

The invention enables on-site assembly while maintaining efficient operation.

By means of the spiral structure forming the subject of the present invention, the **energy efficiency of a device in which the structure is installed is improved.**

The invention is particularly suitable for use in wind turbines, providing a more efficient and cost-effective alternative to conventionally formed aerodynamic surfaces.

The structure according to the invention is adapted to operate in gas or liquid flows, such as air, steam, water, or other fluid media, and enables the generation of aerodynamic or hydrodynamic forces, including lift and drag forces, in a manner optimized for energy efficiency.

The subject matter of the invention is illustrated in the drawings, in which:
- Fig. 1: - shows two flat sheets, namely:
below - a flat sheet at the stage of production and transport, and
above - a sheet at the stage of forming into a spatial spiral structure (i.e. at the stage of
imparting a shape corresponding to an Archimedean spiral);
- Fig. 2: - shows a preliminarily formed, wound sheet, the axis of rotation of which is defined by a shaft provided with a plurality of mounting elements of the assembly system, including visible clamps;
- Fig 3: - shows three sheets (with three sets of mounting elements of the assembly system), the axis of rotation of which is defined by a shaft, at a stage of forming a **final flow structure having aerodynamic properties,** i.e. at a stage of adding reinforcements in the form of spoke;
- Fig. 4: - shows a single sheet surrounded by spaced-apart elements of the assembly system, including clamps visible on the sheet, as well as a supporting framework comprising spokes and their fasteners, wherein all these elements are shown spaced apart, for illustrative purposes, from the axis of rotation in the form of a shaft;
- Fig. 5: - shows an assembled spiral structure for converting the energy from a flow of a working medium into useful energy, comprising three sheets fixed with fasteners, clamps and spokes extending through the sheets, in an axonometric view;
- Fig. 6: - shows an assembled spiral structure for converting energy from a flow of a working medium into useful energy, comprising three sheets fixed by fasteners, clamps and spokes extending through the sheet - in a top view;

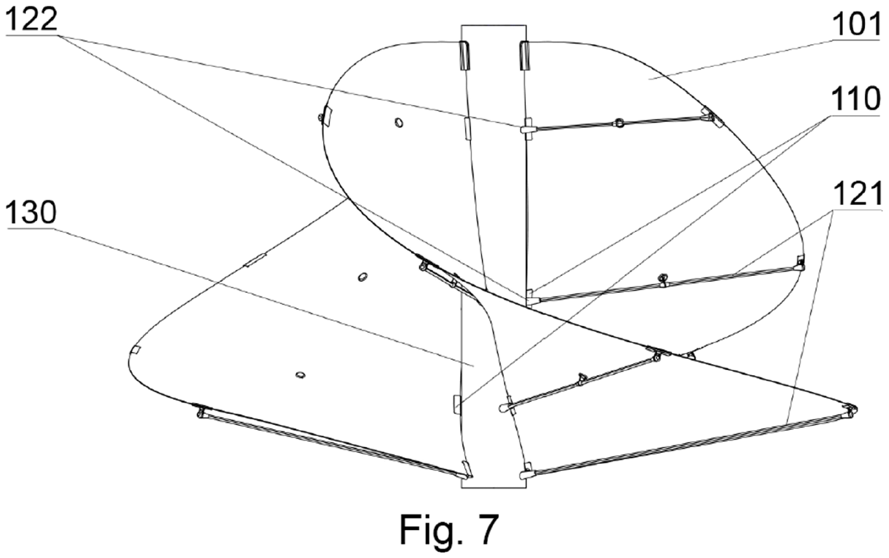

- Fig. 7: - shows an assembled spiral structure for converting the energy from a flow of a working medium into useful energy, consisting three sheets fixed with fasteners, clamps and spokes, adjacent to the sheet and mounted to the shaft, i.e. to the axis of rotation - in a side view;

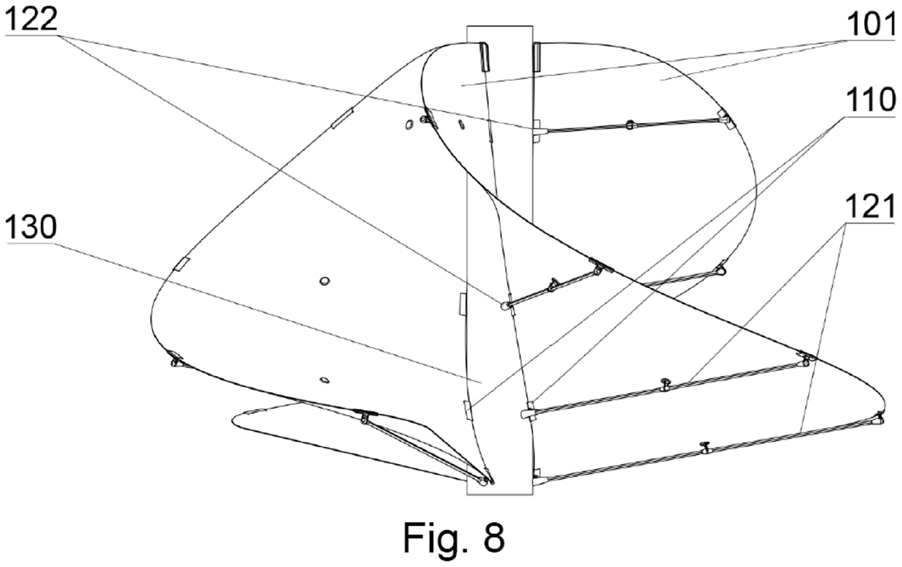

- Fig. 8: - shows an assembled spiral structure for converting energy from a flow of a working medium into useful energy, comprising three sheets fixed by fasteners, clamps and spokes arranged adjacent to the sheet and mounted to the shaft, i.e. to the axis of rotation - in a side view at different stage of rotation;
- Fig. 9: - shows an assembled spiral structure for converting the energy from a flow of a working medium into useful energy, comprising three sheets fixed with fasteners, clamps and spokes, arranged adjacent to the sheet and mounted to the shaft, i.e. to the axis of rotation - in a side view at a different stage of rotation - in a bottom view;

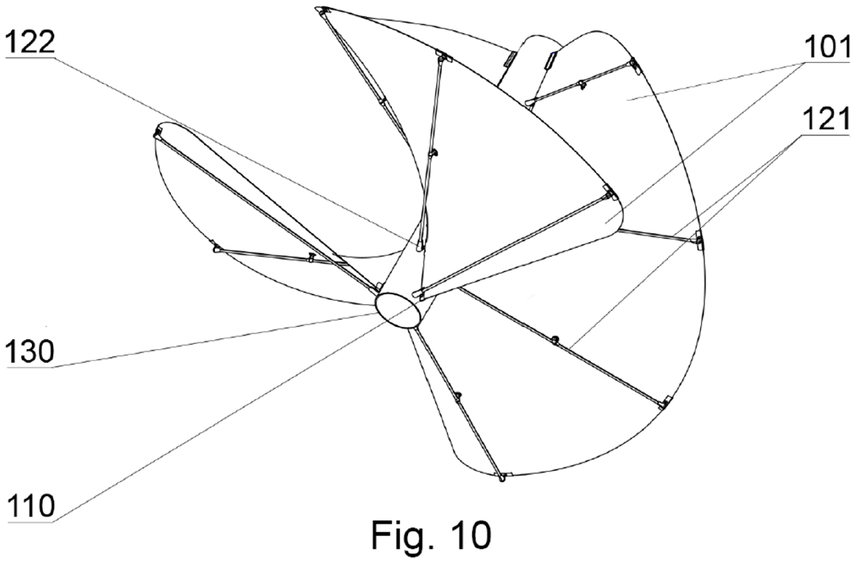

- Fig. 10: - shows an assembled spiral structure for converting the energy from a flow of a working medium into useful energy, comprising three sheets fixed by fasteners, clamps and spokes, arranged adjacent to the sheet and mounted to the shaft - in a side view at a different stage of rotation - in an isometric view;
- Fig. 11: - a flat sheet, which may have a shape different from that shown in Fig. 1 (i.e. an example of a flat sheet which may have any shape such as shown in Fig. 1 or Fig. 11).

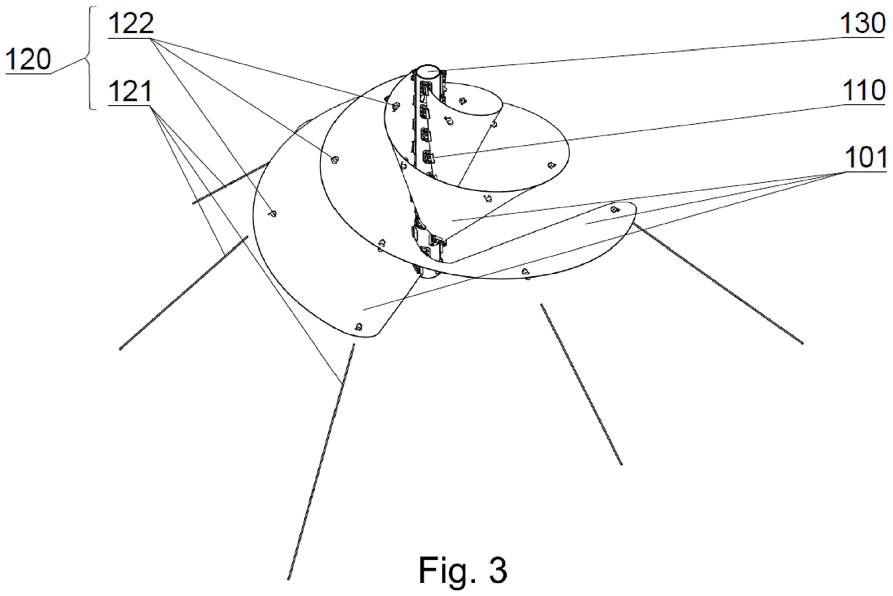

Almost all elements described below may be applied in an exemplary embodiment of the developed **spiral structure** for converting the energy form a flow of a working medium into useful energy, which constitutes a **turbine 100** (shown, for example, in Fig. 3). The final flow structure, having properties enabling the conversion of the energy of a working fluid flow into useful energy (arising as a result of the implementation of the developed **system for assembling spiral structures for converting the energy from the flow of the working medium into useful energy)** - preferably composed of three analogous sheets (101), typically substantially semicircular in shape.

The sheet is shaped by means of a forming die, the shape of which is selected depending on the intended application and the properties required for the final form adapted for optimal converting energy from a flow of a working medium into useful energy.

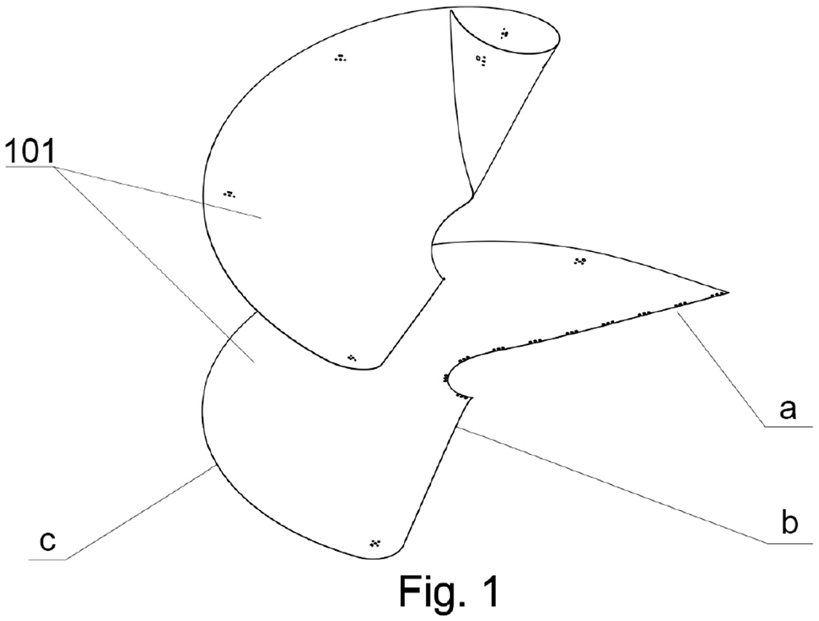

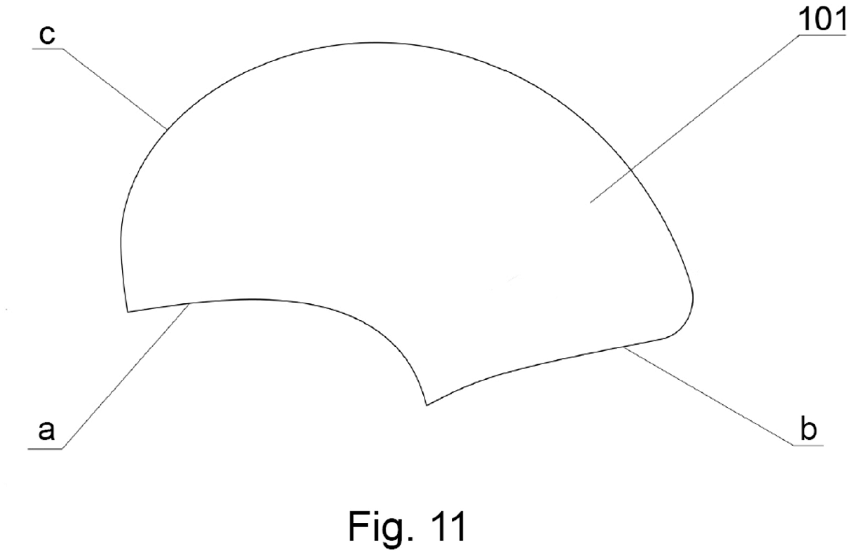

The shapes of the forming dies and the sheets (101) may vary significantly (for example as illustrated in Fig. 1 and Fig. 11).

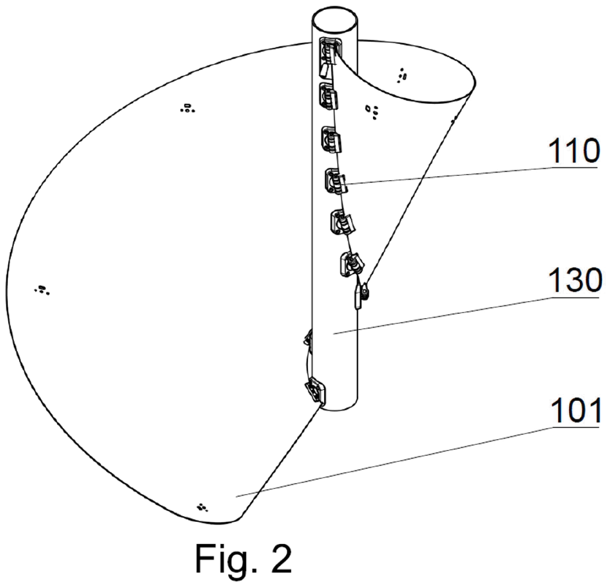

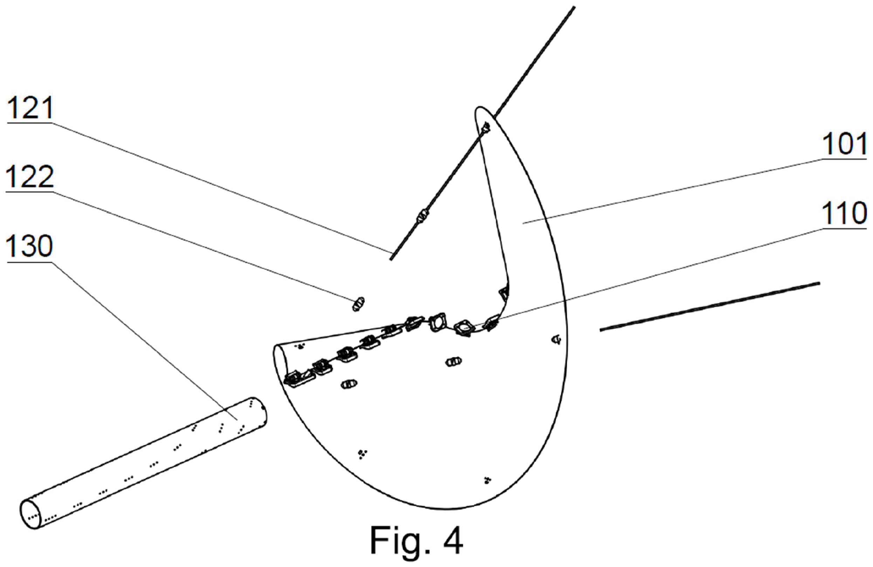

For example, each initially flat sheet constitutes a basic fragment of an oval plane, forming **sheet 101** (Fig. 1, Fig. 2, and Fig. 4) with a centrally arranged, substantially **semicircular cut-out,** from which two radii extend to the edge contour of the sheet.

The sheet 101 (initially flat, and then subsequently wound sheet 101) has three edges:
a) **edge "a"** - after winding the sheet 101, forms an inner edge of the spiral structure, adjacent to a cylinder constituting the **axis of rotation 130,** around which a final form adapted for optimal converting energy from the flow of the working medium into useful energy is formed (Fig. 1), said edge extending from a junction with edge "b" towards a junction with edge "c" (for example, reaching edge "c" at an angle in the range of approximately 60° to 120°, whereby edge "a" constitutes the only region of contact between the **sheet 101** and the **axis of rotation 130** (axis of rotation 130, preferably in the form of a cylinder),
b) **edge "b"** - after winding the **sheet 101,** forms an edge corresponding to the widest portion of the geometric figure formed by spirally wrapping the sheet 101 around a cylinder constituting the **axis of rotation 130,** wherein, in a structure composed of three analogous sheets 101 forming a spiral around the cylinder constituting the **axis of rotation 130,** edge "b" traces the outer radius of the structure (edge "b" as illustrated, for example, in Figs. 1, Fig. 6, and Fig. 11);
c) **edge** "c" - after winding the **sheet 101,** forms an outer circumferential edge of the spiral structure of the **sheet 101** used to form the final configuration adapted for optimal converting energy from the flow of the working medium into useful energy (the circumferential edge "c" is visible, for example, in Fig. 1).

As a result of assembling three **sheets 101,** a spiral structure for converting energy from the flow of a working medium into useful energy is formed.

The points of intersection of edges "b" and "c" define the outer radius of the structure formed by three analogous **sheets 101** arranged in a spiral around a cylinder, i.e. around the **axis of rotation 130.**

The points of intersection of edges "b" and "c" are located at the greatest distance from the central element **of the structure,**

while edge "b" defines the radius of the structure.

At the same time, the points of intersection of edges "b" and "c" constitute **the outermost points of the spiral structure** arranged around the cylinder, i.e. around the **axis of rotation 130,** that is, around the spiral structure for converting energy from the flow of the working medium into useful energy.

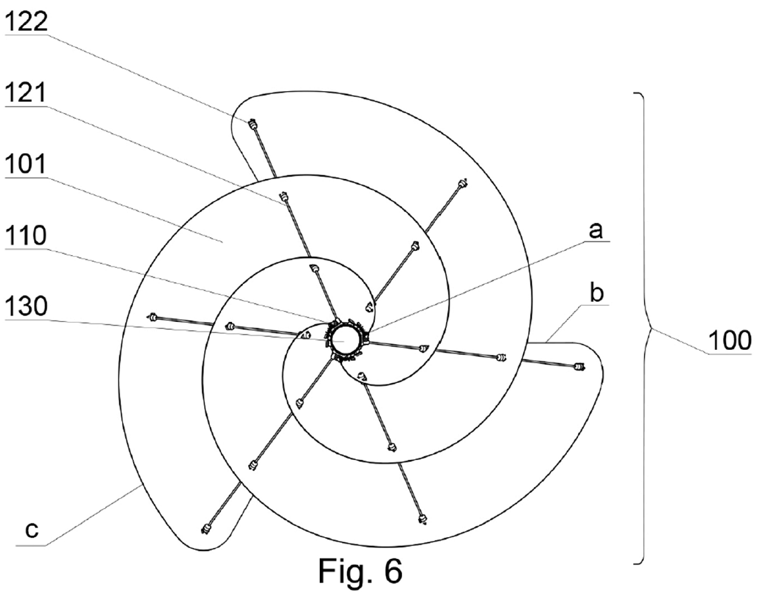

The point of intersection of edges "b" and "c" is illustrated, for example, in Fig. 6.

The point of intersection:
- **between edge "a"** and **edge "c"** of the plane of the **sheet 101** is, in some embodiments, rounded, (as illustrated, for example, in Figs. 1, 6, and 11),
- between **edge "b"** and **edge "c"** of the plane of the **sheet 101** is typically sharp.

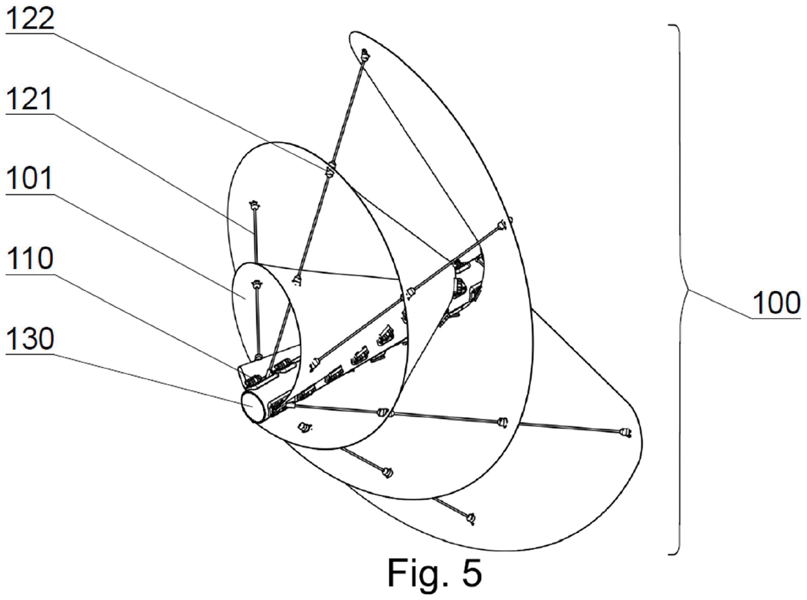

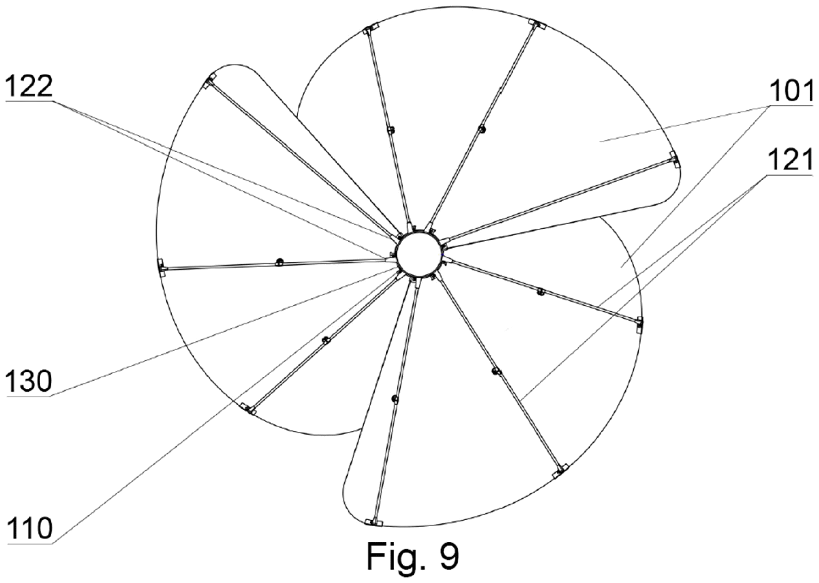

The developed spiral structure for converting energy from the flow of the working medium into useful energy, formed by assembling at least three **sheets 101, which can constitute** a turbine **100,** for example a wind **turbine 100** (Figs. 5 and 6), comprises key elements including:
1) **initially flat** (and easy to transport) typically three **sheets 101** made of **at least one thermoplastic** or **composite material** (such as: fiberglass, carbon fiber, Kevlar, or another advanced composite material), which serve as primary structural elements, wherein the **sheets are flat at an initial stage of the assembly system** (which facilitates both their production and transport), and are then **shaped during assembly** at **the planned operation site;**
2) a plurality of **mounting elements** with adjustable **clamps 110** (arranged at predetermined locations on the cylinder, i.e., **on the axis of rotation 130** - for facilitating secure attachment of the **initially flat sheet 101),** wherein the arrangement of the mounting elements with adjustable clamps **110** can be modified based on aerodynamic tests performed to optimize the performance of the developed adjustable element forming the spiral structure for converting energy from the flow of the working medium into useful energy (wherein the **mounting elements** with adjustable **clamps 110 enable gradual adjustment** to obtain a **desired three-dimensional** aerodynamic **curvature,** as the **clamps 110** have at least **two degrees of freedom** of positional **adjustment,** thereby **allowing both rotational movement** and **bending,** and enabling adaptation of the **developed spiral structure** to various **configurations** and **performance requirements);**
3) in some embodiments of the developed **spiral structure** for converting energy from the flow of the working medium into useful energy, **turbine 100** components (in
particular **spokes 121 and fasteners 122),** form a **supporting framework 120,** as they are **integrated with** the sheets **101, maintain** the imparted **shape** thereof, and provide structural integrity under aerodynamic forces, wherein the **supporting framework 120** prevents deformations that could be caused by external forces, such as wind pressure or vibrations, thus, the developed spiral structure may include a **supporting framework 120** consisting of **spokes 121** and **fasteners 122** ensuring **structural stability** and **maintaining the position of the spirally** (appropriately) **shaped sheets 101,** whereby the **attachment of sheets 101** to the cylinder, i.e., **to and around the axis of rotation 130,** is provided in particular by **spokes 121** extending **through the planes of the sheets 101,** (as illustrated in Fig. 3 and Fig. 6), or **spokes 121** arranged adjacent to the **sheets 101** and mounted to the shaft, i.e. to the **axis of rotation 130,** (as illustrated in Fig. 9).

Preferably, after shaping the **sheet 101** of the developed **element forming a spiral structure** (for converting energy from the flow of a working medium into useful energy), the primary reinforcing elements, namely the **spokes 121,** are mounted using at least two systems.

In a first arrangement, the **spokes 121** extend **through** at least two **adjacent** spiral **surfaces** of the shaped **sheets 101** and connect them to one another, thereby forming a binding element that maintains the relative positioning of the spiral planes and increases the structural rigidity thereof (as illustrated in Fig. 3 and Fig. 6).

Alternatively, in a second arrangement, the **spokes 121** are mounted to an element associated with the axis of rotation and extend transversely to the shaft, i.e. to the **axis of rotation 130** (as illustrated in Fig. 9). In particular, the spokes 121 are mounted on a leeward side relative to the spiral surface and thereby form radial or transverse supports.

The attachment of the described elements is facilitated by the above-mentioned supporting and/or retaining elements for the sheet 101, which typically take the form of hinged **fasteners 122, clamps 110, connectors,** or **collars,** enabling adaptation to the local inclination and curvature of the spirally mounted **sheet 101.**

Preferably, these elements are arranged in at least **three mounting zones:**
- in a zone adjacent to a tubular element,
- in a central zone and an intermediate zone and
- in an edge zone of the blade.

These elements enable, during the joining of the elements, i.e. **at** an appropriate **stage of the assembly system for spiral structures** (for converting energy from the flow of the working medium into useful energy), the **attainment of different pitches** and **inclination angles** of the spirally formed **sheets 101.**

Optionally, the developed **adjustable element forming a spiral structure** (for converting energy from the flow of the working medium into useful energy) is provided with a **thermoforming mechanism** configured to assist in the process of spirally shaping the **sheet 101** (particularly when thermoplastic materials are used for the **sheet 101).**

The **thermoforming mechanism** ensures precise shaping of **sheet 101,** which is often transformed into an aerodynamic profile.

This mechanism may be equipped with **built-in heating elements** or an **external thermal application,** the purpose of which is to **soften** the thermoplastic **sheets 101** and facilitate their precise shaping.

By means of a plurality of mounting elements (including adjustable clamps **110),** for each typically initially **flat,** and then - by the **assembly system** - spirally shaped **sheet 101,** it is possible to attach virtually any number of **sheets 101** to a **common axis of rotation 130,** for example, of the wind turbine **100.**

Each mounting element with adjustable **clamps 110** independently adapts to the shape and inclination of the attached **sheet 101,** as it has at least **two degrees of freedom: rotation movement and bending.** This flexibility enables the formation of the desired shape of each **sheet 101** without the need for dedicated mounting solutions for each configuration, and in addition, the mounting elements with adjustable clamps **110** ensure a smooth aerodynamic transition between the connected **sheets 101,** thereby **reducing turbulence** and improving efficiency.

Examples of embodiments of the present invention include aerodynamic **turbines 100** comprising **three** or **six** initially flat **sheets 101,** wherein:
a. the sheets **101** are made of a thermoplastic or composite material;
b. a plurality of mounting elements with adjustable clamps **110** are arranged in a predefined pattern;
c. adaptive, universal mounting elements with adjustable clamps **110** are configured to attach the sheets **101** to a common axis of rotation **130** of the wind turbine **100,** while enabling adjustment of their three-dimensional curvature.

In some embodiments, the three-dimensional shape corresponds to an Archimedean spiral or a similar aerodynamic profile optimized for efficiency.

**In some embodiments, according to the invention, the mounting elements with clamps 110 can be strategically arranged to enable multiple curvature configurations based on aerodynamic requirements. In some embodiments, the adaptive universal mounting elements with clamps 110 are provided with a rotary joint and a bending joint, enabling the clamps 110 to adapt to changes in inclination and shape of the sheet 101.**

In some other embodiments, according to the invention, the mounting elements with clamps **110** allow safe attachment of from **one** (up to six) **sheets 101** to a common central **axis of rotation 130,** without the need for different fastening elements for each configuration.

Examples of embodiments of a **system for assembling spiral structures for converting energy from a flow of a working medium into useful energy** may also include steps **such as:**
**a.** supplying a flat **sheet 101** material;
**b. positioning** mounting **elements** with clamps **110** in a predefined arrangement;
**c.** attaching the sheets **101** to the mounting elements with **clamps 110;**
**d.** adjusting the locking **clamps 110** to form a three-dimensional aerodynamic profile;
**e.** mounting from one to six spirally wound **sheets 101** on a common **axis of rotation 130** by means of a universal locking **clamp 110;**
**f.** optionally applying thermoforming or pre-stressing to increase shaping precision;
**g.** using mounting elements with locking clamps 110, configured to attach the sheet 101 to a common axis of rotation 130, to adjust the three-dimensional curvature;
**h.** advantageously, the **sheets 101** of **the turbine 100** may be **shaped** using **built-in heating elements** of the developed, adjustable element forming a spiral structure (for converting energy form the flow of the working medium into useful energy) or an **external thermal application** used **to soften thermoplastic sheets 101** in order to facilitate precise shaping thereof, when thermoplastic materials are used to make **sheet 101** or
**i.** arranging the mounting elements with **clamps 110** in a strategic manner to enable **assembly and to obtain multiple configurations and curvatures** adapted to aerodynamic performance requirements;
**j.** providing adaptive, universal mounting elements with adjustable **clamps 110** with a **rotary joint** and a **bending joint,** enabling the **clamps 110** to adapt to changes in **inclination and shape of the sheets 101;**
**k. turbine** 100 may be shaped to include a **supporting framework 120** consisting **of spokes 121** and **fasteners 122,** ensuring structural stability, even when the spirally shaped sheets **101** are subjected to intense aerodynamic forces;
**l.** in some embodiments, shaping the three-dimensional aerodynamic profile to correspond to an Archimedean spiral or a similar shape designed for aerodynamic optimization;
**m.** in some embodiments of the developed system for **assembling spiral structures for converting energy from a flow of a working medium into useful energy,** sheet **101** material can be selected from: thermoplastic, fiberglass, carbon fiber, Kevlar, or other advanced composite materials, ensuring durability and performance.

### List of reference

- 100 -: turbine (example spiral structure for converting wind energy into useful energy);
- 101-: sheet (initially flat);
- 110 -: clamp (mounting element with a clamp);
- 120 -: supporting framework;
- 121-: spoke;
- 122 -: fastener (usually hinged);
- 130 -: axis of rotation.

## Claims

1. An adjustable element for forming a spiral structure for converting energy from a flow of a working medium into useful energy, **characterized in that** it is optimally composed of three analogous **sheets (101),** typically substantially semicircular in shape, wherein each **sheet (101),** initially flat and subsequently wound, has three edges:
• **edge "a"** - which, after winding the sheet (101), forms an inner edge of the spiral structure, adjacent to a cylinder constituting an **axis of rotation (130),** around which a final form adapted for optimal converting energy form the flow of the working medium into useful energy is formed, said edge extending from a junction with edge "b" towards a junction with edge "c", and for example reaching edge "c" at an angle in the range of approximately 60° to 120°, wherein edge "a" constitutes the only region of contact between the **sheet (101)** and the **axis of rotation (130),** preferably in the form of a cylinder;
• **edge "b"** - which, after winding the **sheet (101),** forms an edge corresponding to the widest portion of a geometric figure formed by spirally wrapping the sheet (101) around the cylinder constituting the **axis of rotation (130),** wherein, in a structure composed of three analogous sheets (101) forming a spiral around the cylinder, edge "b" traces an outer radius of the structure;
• **edge** "c" - which, after winding the **sheet (101),** forms an outer circumferential edge of the spiral structure of the **sheet (101)** used to form the final configuration adapted for optimal converting energy from the flow of the working medium into useful energy;
wherein points of intersection of radii "b" and "c" define the outer radius of the structure formed by analogous **sheets (101)** forming a spiral figure around the cylinder, i.e., around the **axis of rotation (130),** and additionally
the points of intersection of edges "b" and "c" are the most distant from the central element of **this figure,** with edge "b" defines the radius of this structure,
while simultaneously the points of intersection of radii "b" and "c" constitute the **outermost points** of the spiral figure around the cylinder, i.e., around the **axis of rotation (130),** that is, around the spiral structure for converting the flow energy of a working fluid into useful energy.

2. The adjustable element forming a spiral structure for converting energy from the flow of the working medium into useful energy, according to claim 1, **characterized in that** the sheet (101) constitutes a basic fragment of an oval plane, with a centrally arranged, substantially **semicircular cut-out.**

3. The adjustable element forming a spiral structure for converting energy from the flow of the working medium into useful energy, according to claim 1 or 2, **characterized in that** the spiral structure constitutes a **turbine (100).**

4. The adjustable element forming a spiral structure for converting energy from the flow of the working medium into useful energy, according to claim 1 or 2 or 3, **characterized in that** the junction:
• **between edge "a"** and **edge "c"** of the plane of **sheet (101)** - is rounded, and
• **between edge "b"** and **edge "c"** of the plane of **sheet (101)** - is sharp.

5. The adjustable element forming a spiral structure for converting energy from the flow of the working medium into useful energy, according to claim 1 or 2 or 3 or 4, **characterized in that the** sheets **(101)** are:
• **initially flat** and made from **at least one thermoplastic or composite material,** such as: fiberglass, carbon fiber, Kevlar, or another advanced composite material, and constitute primary structural elements, with the **sheets** (101) **being flat at the initial stage of the assembly system,** and then being spiral-**shaped;**
• a plurality of **mounting elements** with adjustable **clamps (110)** are arranged at predetermined locations on the cylinder, i.e., on the **axis of rotation (130),** and together constitute the spiral structure along with the **mounting elements** with adjustable **clamps (110) for gradual adjustment** to obtain a **desired three-dimensional** aerodynamic **curvature,** with at least **two degrees of freedom** of position **adjustment.**

6. The adjustable element forming a spiral structure for converting energy from the flow of the working medium into useful energy, according to claim 1 or 2 or 3 or 4 or 5, **characterized in that turbine (100)** components, namely **spokes (121)** and **fasteners (122),** form a **supporting framework (120),** said components **being integrated** with the sheets **(101).**

7. The adjustable element forming a spiral structure for converting energy from the flow of the working medium into useful energy, according to claim 6, **characterized in that** the **spokes (121)** extend through the **planes of the sheets (101)** or, alternatively, the **spokes (121)** are arranged adjacent to the **sheets (101)** and mounted to the shaft, i.e., to **the axis of rotation (130).**

8. The adjustable element forming a spiral structure for converting energy from the flow of the working medium into useful energy, according to claim 1 or 2 or 3 or 4 or 5 or 6 or 7, **characterized in that** the sheet (101) is secured by **fasteners (122)** or **usually collars, connectors, or clamps (110),**
enabling adaptation to the local inclination and curvature of the spirally mounted **sheet (101),** wherein said elements are arranged in at least **three mounting zones:**
• in a zone adjacent to a tubular element,
• in a central zone and an intermediate zone and
• in an edge zone of the blade.

9. The adjustable element forming a spiral structure for converting energy from the flow of the working medium into useful energy, according to claim 1 or 2 or 3 or 4 or 5 or 6 or 7 or 8, **characterized in that** the adjustable element forming the spiral structure for converting the flow of the working medium into useful energy, is equipped with a **thermoforming mechanism** configured to assist in shaping the **sheet (101),** or with **built-in heating elements** or an **external thermal application.**

10. The adjustable element forming a spiral structure for converting energy from the flow of the working medium into useful energy, according to claim 1 or 2 or 3 or 4 or 5 or 6 or 7 or 8 or 9, **characterized in that** its three-dimensional shape corresponds to an Archimedean spiral or a similar aerodynamic profile optimized for efficiency.

11. **A system for assembling spiral structures for converting energy from the flow of the working medium into useful energy, characterized in that** it comprises the steps of:
a. supplying flat **sheet (101)** material, or
b. **positioning** mounting **elements** with clamps **(110)** in a predefined arrangement;
c. attaching sheets **(101)** to the mounting elements with **clamps (110),** or
d. adjusting the locking **clamps (110)** to form a three-dimensional aerodynamic profile, or
e. mounting from one to six spirally wound **sheets (101)** on a common **axis of rotation (130)** using a universal locking **clamp (110),** or
f. optionally applying thermoforming or pre-tensioning to increase shaping precision, or
g. locking mounting elements with clamps **(110)** - designed for securing the sheet **(101)** to the common axis of rotation **(130)** - may be used to adjust the three-dimensional curvature, or
h. advantageously, the **sheets (101) of the turbine (100)** may be shaped using **built-in heating elements** of the developed adjustable element forming the spiral structure for converting energy from the flow of the working medium into useful energy, or an **external thermal application** used to **soften thermoplastic sheets (101)** to facilitate precise shaping when thermoplastic materials are used to make **sheet (101),** or
i. arranging the mounting elements with **clamps (110)** in a strategic manner to enable **assembly and to obtain multiple configurations and curvatures** adapted to aerodynamic performance requirements, or
j. providing adaptive, universal mounting elements with adjustable **clamps (110)** with a **rotary joint** and a **bending joint,** enabling the **clamps (110)** to adapt to changes in **inclination and shape of the sheets (101),** or
k. **turbine (100)** may be shaped to **include** a **supporting framework (120)** consisting **of spokes (121)** and **fasteners (122),** ensuring structural stability, even when the spirally shaped sheets **(101)** are subjected to intense aerodynamic forces;
l. in some embodiments, shaping the three-dimensional aerodynamic profile to correspond to an Archimedean spiral or a similar shape designed for aerodynamic optimization;
m. in some embodiments of the developed **system for assembling spiral structures for converting energy from a flow of a working medium into useful energy,** sheet **(101)** material can be selected from: thermoplastic, fiberglass, carbon fiber, Kevlar, or other advanced composite materials, ensuring durability and performance.
